# EUROPÄISCHE PATENTANMELDUNG

(11) **EP 2 080 961 A2**
(43) Veröffentlichungstag der Anmeldung: **22.07.2009**
(21) Anmeldenummer: 09000379.9
(22) Anmeldetag: 14.01.2009
(51) Int. Cl.: F24H 1/32, F24H 8/00

(54) **Gliederheizkessel**

(30) Priorität: 17.01.2008 DE 102008004837
(71) Anmelder: Robert Bosch GmbH, 70442 Stuttgart (DE)
(72) Erfinder: Rausch, Rainer, 36304 Alsfeld (DE)

(57) **Zusammenfassung**

Die Erfindung betrifft einen Gliederheizkessel, insbesondere Brennwertheizkessel, umfassend mindestens ein vertikales Kesselglied (1) aus einem Gusswerkstoff für Gas- oder Ölgebläsebrennerfeuerung, für den Wärmeaustausch zwischen Heizgasen und Kesselwasser, mit einer Brennkammer (2) im oberen Bereich mit Anschlussmöglichkeit für einen Gas- oder Ölgebläsebrenner, mit Strömungskanälen (3) für Heizgase und mit Strömungskanälen für Kesselwasser, wahlweise oberflächenvergrößernden Wärmeleitelementen in Brennkammer (2), Strömungskanälen (3) und/oder Heizfläche, mit einem Strömungsweg (3) der Heizgase über Heizflächen von der Brennkammer (2) zu einem Abgasstutzen im unteren Bereich, mit Naben (4, 5) für die wasserseitige Verbindung der Kesselglieder (1) untereinander sowie mit einem Vorlaufanschluss in der oberen Nabe (4) und einem Rücklaufanschluss in der unteren Nabe (5).

Der Erfindung liegt die Aufgabe zugrunde, einen Gliederheizkessel, insbesondere Brennwertheizkessel, im Hinblick auf kostengünstige Herstellung und gute Skalierbarkeit zu optimieren.

Der erfindungsgemäße Gliederheizkessel ist **dadurch gekennzeichnet, dass** im unteren Bereich ein Abgas- und Kondenswassersammler (6) angeformt ist, dass die Brennkammer (2) von einem ringförmigen Wasserarm (9) eingefasst ist und dass unterhalb der Brennkammer (2), ausgehend von der unteren Nabe (5), mehrere vertikale Wasserarme (8) an den ringförmigen Wasserarm (9) wasserseitig angebunden sind, welche zwischeneinander vertikale Strömungskanäle (3) für Heizgase ausbilden.

## Beschreibung

Die Erfindung betrifft einen Gliederheizkessel aus vertikalen Kesselgliedern aus einem Gusswerkstoff für Gas- oder Ölgebläsebrennerfeuerung, insbesondere zur Verwendung in einem Brennwertheizgerät nach dem Oberbegriff des Patentanspruches 1.

Gattungsgemäße Gliederheizkessel werden bei Heizgeräten für den Wärmeaustausch zwischen den Heizgasen und dem Kesselwasser eingesetzt. Ihr Aufbau umfasst unter anderem eine Brennkammer zur Aufnahme des Gas- oder Ölbrenners, Strömungskanäle für Heizgase und Kesselwasser, Nachschaltheizflächen für die Kondensation der Abgasfeuchte, oberflächenvergrößernde Wärmeleitelemente in Brennkammer, Strömungskanäle und Nachschaltheizflächen, Abgasaustrittsöffnungen zum Anbringen eines Abgas- und Kondensatsammlers, sowie Naben für die wasserseitige Verbindung der Kesselglieder untereinander.

Hinsichtlich der Abgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Abgase unter den Abgastaupunkt abzukühlen. Dabei kondensiert die Feuchtigkeit der Abgase in einer der Brennkammer in Strömungsrichtung nachfolgenden, sogenannten Nachschaltheizfläche aus, und es wird zusätzlich zur fühlbaren Wärme die Kondensationswärme auf das Heizwasser übertragen. Heizgas und Kondenswasser strömen nach unten, während das Kesselwasser vom Rücklaufanschluss im unteren Bereich zum Vorlaufanschluss im oberen Bereich strömt.

Aufgrund der Zusammensetzung des verwendeten Brennstoffes und der Verbrennungsführung sind die Abgase schadstoffbelastet und das anfallende Kondenswasser weist verschiedene Säuren in geringer Konzentration auf. Die vom Kondenswasser berührten Bauteile wie Wärmetauscher, Abgassammler und Abgasleitung müssen also gegenüber den Säuren resistent sein. Daher ist es üblich, diese Bauteile aus Edelstahl, Aluminium oder Kunststoff zu fertigen. Speziell in der Ölbrennwerttechnik kommen im Allgemeinen geschweißte Edelstahlwärmetauscher zur Anwendung. Sie bieten den Vorteil, die Säurebelastung weitgehend ohne Korrosion zu ertragen. Nachteilig sind die mit dem Werkstoff verbundenen hohen Kosten, ungünstigere konstruktive Randbedingungen zum Skalieren auf andere Leistungsgrößen und die größeren, in räumlich engen Verhältnissen schwer handhabbaren Baugrößen.

Die Wärmetauscher konventioneller Heizwertgeräte werden häufig aus Gusseisen hergestellt. Sie zeichnen sich durch hohe Robustheit und lange Lebensdauer aus. Ihr Aufbau aus zumeist identischen Kesselgliedern erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Der Werkstoff erträgt die kurzen Abgaskondensationsphasen bei Betriebsstart und kaltem Wärmetauscher sehr gut. Auch für den Brennwertbetrieb mit länger anhaltendem Kondenswasseranfall ist Gusseisen mit bekannten Modifikationen, wie zum Beispiel einer aufgebrachten Beschichtung, geeignet.

Hinsichtlich der heizwasserseitigen Strömungsführung unterscheidet man zwischen zwangsdurchströmten und nicht zwangsdurchströmten Wärmetauschern. Bei zwangsdurchströmten Wärmetauschern sorgt eine Umwälzpumpe für einen vorgegebenen Wasservolumenstrom durch die zumeist engen, mäanderförmig angelegten Wasserkanäle. Auf diese Weise sind trotz geringen Wasserinhaltes recht hohe, heizgasseitig eingetragene Wärmestromdichten realisierbar. Bei nicht zwangsdurchströmten Wärmetauschern ist der Kesselwasserinhalt deutlich größer, gleichzeitig sind die realisierbaren Wärmestromdichten in der Regel niedriger. Die Wasserführung erfolgt nicht in engen geschlossenen Kanälen, sondern über oberflächenvergrößernde Wärmeleitelemente, beispielsweise in Rippenform, in vergleichsweise groß bemessenen Querschnitten und basiert auf thermischer Konvektion. Ausgehend von einem beispielsweise ruhenden Kesselwasserinhalt wird bei heizgasseitiger Beheizung des Wärmetauschers das den Wärmetauscher berührende Wasser durch Wärmeleitung erwärmt. Aufgrund des thermischen Auftriebs kommt allmählich eine Strömungswalze auf der Wasserseite in Gang, die das erwärmte Wasser nach oben abführt und weiteres zu erwärmendes Wasser von unten an die heiße Wärmetauscheroberfläche heranführt. Wegen dieser konvektiven Strömungswalze und den groß bemessenen Querschnitten weisen nicht zwangsdurchströmte Wärmetauscher eine hohe Robustheit im Betrieb zum Beispiel gegenüber einem etwaigen Pumpenausfall auf.

Bekannt sind daher auch separate Brennwertwärmetauscher und separate Kondenswassersammelwannen. Diese müssen beispielsweise über spezielle Dichtflächen mit dem Wärmetauscher oder einem Block aus Kesselgliedern abgasdicht verbunden werden, wobei bei einem Block dann Toleranzen der einzelnen Glieder an einer meist horizontalen Gesamt-Dichtfläche im unteren Bereich auszugleichen sind. Zudem ist der Montageaufwand relativ hoch und die Skalierbarkeit auf verschiedene Leistungsgrößen ist nachteilig, da bei einer variablen Zahl von Kesselgliedern hintereinander jeweils separate Bauteile für die einzelnen Leistungsgrößen in relativ kleinen Serien hergestellt werden müssen.

Der Erfindung liegt die Aufgabe zugrunde, einen Gliederheizkessel, insbesondere Brennwertheizkessel, im Hinblick auf kostengünstige Herstellung und gute Skalierbarkeit zu optimieren.

Erfindungsgemäß wird dies mit den Merkmalen des Patentanspruches 1 gelöst. Vorteilhafte Weiterbildungen sind den Unteransprüchen zu entnehmen.

Der konstruktive Aufbau des Gliederheizkessels ist **dadurch gekennzeichnet, dass** im unteren Bereich an jedem Kesselglied ein Abgas- und Kondenswassersammler angeformt ist, so dass sich insgesamt, mit mehreren Gliedern, ein durchgehender Abgas- und Kondenswassersammelraum im unteren Bereich des Kesselblockes ergibt. Die Brennkammer wird von einem ringförmigen Wasserarm eingefasst. Unterhalb der Brennkammer, ausgehend von der unteren Nabe, sind mehrere vertikale Wasserarme an den ringförmigen Wasserarm wasserseitig angebunden, welche zwischeneinander vertikale Strömungskanäle für Heizgase ausbilden.

Der im unteren Bereich angeformte Abgas- und Kondenswassersammler ist unterhalb eines Wasser führenden horizontalen Steges, welcher die untere Nabe sowie vertikale Wasserarme aufnimmt, angeordnet. Außerdem ist der Abgas- und Kondenswassersammler von einer nicht wassergekühlten Kessel-Außenwand umgeben, welche etwa in Halbkreisform die untere Verlängerung der im oberen Bereich wassergekühlten Kessel-Außenwand bildet. Mindestens eine Überströmöffnung für Heizgase weist der sich ringförmig um die Brennkammer erstreckende Wasserarm im Bereich der oberen Nabe auf. Dabei ist die mindestens eine Überströmöffnung nach oben und/oder schräg nach oben hin gerichtet. Der ringförmige Wasserarm ist, mindestens in Teilbereichen, unterbrochen oder dünner als in den übrigen Ringbereichen ausgeführt.

Zur vertikalen Mittelachse besitzt das Kesselglied einen symmetrischen Aufbau. Die Heizgase strömen aus mindestens einer, jeweils zu beiden Seiten gerichteten Überströmöffnung heraus in jeweils einen seitlich von der Brennkammer, entlang der wassergekühlten Kessel-Außenwand abwärts führenden Heizgaszug und von dort aus in den unterhalb der Brennkammer angeordneten Bereich mit den vertikalen Wasserarmen.

Das Kesselglied läuft, ausgehend von einer maximalen Breite etwa im Bereich der Brennkammer, nach unten hin konisch zu, wobei auch mindestens die äußeren der vertikalen Wasserarme an ihrer Unterseite etwas nach innen, zur unteren Nabe hin, schräg stehen. Damit ist die Abnahme des Heizgas-Volumens beim Abkühlen berücksichtigt, um Strömungsgeschwindigkeiten gleich zu halten.

Weiterhin ist die Grenzfläche zwischen zwei benachbarten Kesselgliedern, mindestens die außen umlaufende Grenzfläche an der wassergekühlten und nicht wassergekühlten Kessel-Außenwand, heizgas- und kondenwasserdicht ausgeführt.

Erfindungsgemäß wird somit ein im Hinblick auf kostengünstige Herstellung und gute Skalierbarkeit optimierter Gliederheizkessel, insbesondere ein Brennwertheizkessel, geschaffen. Es werden dabei die positiven Werkstoff- und Produktionseigenschaften von Gusswerkstoffen gezielt angewendet und genutzt. Der vertikale Kondensationsbereich unterhalb der Brennkammer besteht aus vielen Wasserarmen, an denen rundum ein Wärmeübergang stattfinden kann. Damit steht eine relativ große aktive Wärmetauscher-Oberfläche zur Verfügung, welche bei Bedarf noch mit horizontalen Rippen weiter vergrößert werden kann. Die entstehenden vertikalen Gassen sind einfach von der Kesseltür her zu reinigen.

Das erfindungsgemäße Kesselkonzept ist zudem auch gut für den Einsatz einer korrosionsbeständigen Beschichtung geeignet. Je nach Wasserinhalt und den damit zusammenhängenden Kanalquerschnitten ist das Prinzip sowohl in zwangsdurchströmter als auch in nicht zwangsdurchströmter Ausführung realisierbar. Durch die Integration des Abgas- und Kondenswassersammlers entstehen keine Auskühlverluste und auf eine gesonderte Wärmedämmung kann verzichtet werden. Dennoch ist eine einfache Zugänglichkeit der Abgasseite bzw. des unteren Kesselbereiches gewährleistet.

Die Zeichnung stellt ein Ausführungsbeispiel der Erfindung dar. Es zeigt:

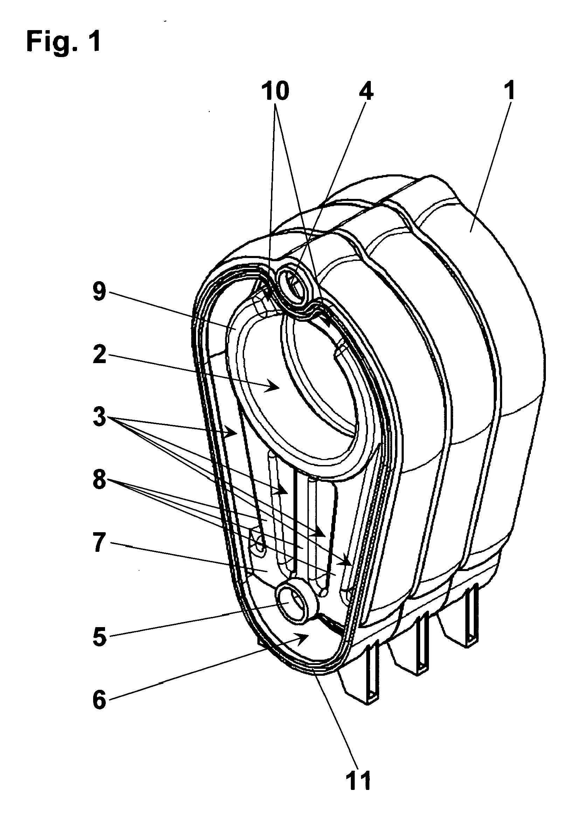

Fig. 1: einen Gliederblock eines Gliederheizkessels, bestehend aus mehreren Kesselglie-dern, in perspektivischer Ansicht und

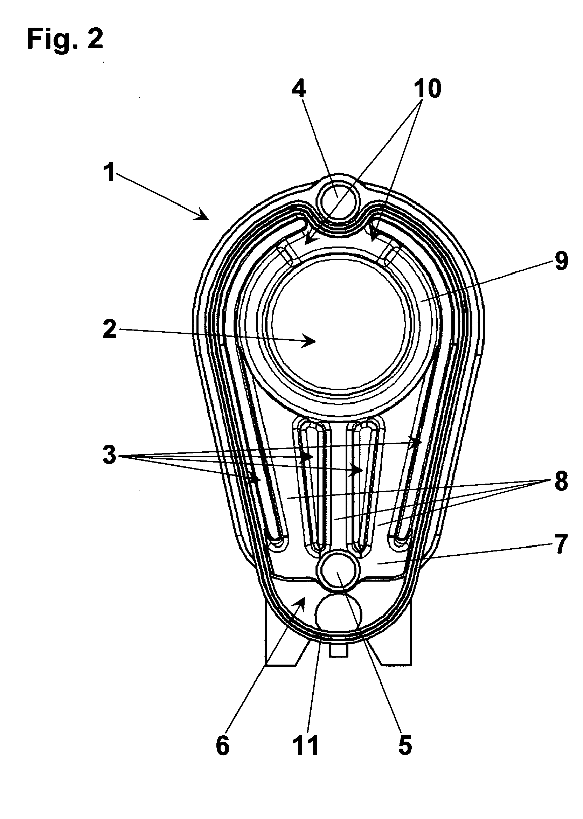

Fig. 2: ein Kesselglied in der Vorderansicht.

Der Gliederheizkessel besteht im Wesentlichen aus mindestens einem vertikalen Kesselglied 1 mit einer Brennkammer 2 im oberen Bereich, mit Strömungskanälen 3 für Heizgase und mit Strömungskanälen für Kesselwasser. Die wasserseitige Verbindung der Kesselglieder 1 untereinander erfolgt mit Naben 4, 5, wobei über die obere Nabe 4 der Vorlaufanschluss und über die untere Nabe 5 der Rücklaufanschluss vorgesehen ist.

Im unteren Bereich ist ein Abgas- und Kondenswassersammler 6 angeformt, nämlich unterhalb eines Wasser führenden horizontalen Steges 7, welcher die untere Nabe 5 sowie vertikale Wasserarme 8 aufnimmt. Die Brennkammer 2 ist von einem ringförmigen Wasserarm 9 eingefasst und unterhalb der Brennkammer 2 sind mehrere vertikale Wasserarme 8 an den ringförmigen Wasserarm 9 wasserseitig angebunden. Dazwischen werden vertikale Strömungskanäle 3 für Heizgase ausgebildet.

Die Heizgase strömen aus einer, jeweils zu beiden Seiten gerichteten Überströmöffnung 10 im ringförmigen Wasserarm 9 heraus in jeweils einen seitlich von der Brennkammer 2, entlang der wassergekühlten Kessel-Außenwand abwärts führenden Heizgaszug. Von dort aus gelangen sie in den unterhalb der Brennkammer 2 angeordneten Bereich mit den vertikalen Wasserarmen 8.

Der angeformte Abgas- und Kondenswassersammler 6 wird unterhalb der unteren Nabe 5 von einer nicht wassergekühlten Kessel-Außenwand umgeben. Mindestens die außen umlaufende Grenzfläche 11 zwischen zwei benachbarten Kesselgliedern 1 ist an der wassergekühlten und nicht wassergekühlten Kessel-Außenwand, heizgas- und kondenswasserdicht ausgeführt.

## Patentansprüche

1. Gliederheizkessel, insbesondere Brennwertheizkessel, umfassend mindestens ein vertikales Kesselglied (1) aus einem Gusswerkstoff für Gas- oder Ölgebläsebrennerfeuerung, für den Wärmeaustausch zwischen Heizgasen und Kesselwasser, mit einer Brennkammer (2) im oberen Bereich mit Anschlussmöglichkeit für einen Gas- oder Ölgebläsebrenner, mit Strömungskanälen (3) für Heizgase und mit Strömungskanälen für Kesselwasser, wahlweise oberflächenvergrößernden Wärmeleitelementen in Brennkammer (2), Strömungskanälen (3) und/oder Heizfläche, mit einem Strömungsweg (3) der Heizgase über Heizflächen von der Brennkammer (2) zu einem Abgasstutzen im unteren Bereich, mit Naben (4, 5) für die wasserseitige Verbindung der Kesselglieder (1) untereinander sowie mit einem Vorlaufanschluss in der oberen Nabe (4) und einem Rücklaufanschluss in der unteren Nabe (5),
**dadurch gekennzeichnet, dass** im unteren Bereich ein Abgas- und Kondenswassersammler (6) angeformt ist, dass die Brennkammer (2) von einem ringförmigen Wasserarm (9) eingefasst ist und dass unterhalb der Brennkammer (2), ausgehend von der unteren Nabe (5), mehrere vertikale Wasserarme (8) an den ringförmigen Wasserarm (9) wasserseitig angebunden sind, welche zwischeneinander vertikale Strömungskanäle (3) für Heizgase ausbilden.

2. Gliederheizkessel nach Anspruch 1,
**dadurch gekennzeichnet, dass** der im unteren Bereich angeformte Abgas- und Kondenswassersammler (6) unterhalb eines Wasser führenden horizontalen Steges (7), welcher die untere Nabe (5) sowie vertikale Wasserarme (8) aufnimmt, angeordnet ist.

3. Gliederheizkessel nach Anspruch 1 oder 2,
**dadurch gekennzeichnet, dass** der im unteren Bereich angeformte Abgas- und Kondenswassersammler (6) von einer nicht wassergekühlten Kessel-Außenwand umgeben ist, welche etwa in Halbkreisform die untere Verlängerung der im oberen Bereich wassergekühlten Kessel-Außenwand bildet.

4. Gliederheizkessel nach einem der Ansprüche 1 bis 3,
**dadurch gekennzeichnet, dass** der sich ringförmig um die Brennkammer (2) erstreckende Wasserarm (9) im Bereich der oberen Nabe (4) mindestens eine Überströmöffnung (10) für Heizgase aufweist und nach oben und/oder schräg nach oben hin, mindestens in Teilbereichen, unterbrochen oder dünner als in den übrigen Ringbereichen ausgeführt ist.

5. Gliederheizkessel nach einem der Ansprüche 1 bis 4,
**dadurch gekennzeichnet, dass** das Kesselglied (1) einen zur vertikalen Mittelachse symmetrischen Aufbau besitzt.

6. Gliederheizkessel nach einem der Ansprüche 1 bis 5,
**dadurch gekennzeichnet, dass** die Heizgase aus mindestens einer, jeweils zu beiden Seiten gerichteten Überströmöffnung (10) heraus in jeweils einen seitlich von der Brennkammer (2), entlang der wassergekühlten Kessel-Außenwand abwärts führenden Heizgaszug und von dort aus in den unterhalb der Brennkammer (2) angeordneten Bereich mit den vertikalen Wasserarmen (8) strömen.

7. Gliederheizkessel nach einem der Ansprüche 1 bis 6,
**dadurch gekennzeichnet, dass** das Kesselglied (1) ausgehend von einer maximalen Breite etwa im Bereich der Brennkammer (2) nach unten hin konisch zuläuft, wobei auch mindestens die äußeren der vertikalen Wasserarme (8) an ihrer Unterseite etwas nach innen, zur unteren Nabe (5) hin schräg stehen.

8. Gliederheizkessel nach einem der Ansprüche 1 bis 7,
**dadurch gekennzeichnet, dass** die Grenzfläche (11) zwischen zwei benachbarten Kesselgliedern (1), mindestens die außen umlaufende Grenzfläche (11) an der wassergekühlten und nicht wassergekühlten Kessel-Außenwand, heizgas- und kondenswasserdicht ausgeführt ist.
